# EUROPÄISCHE PATENTANMELDUNG

(11) **EP 1 607 678 A2**
(43) Veröffentlichungstag der Anmeldung: **21.12.2005**
(21) Anmeldenummer: 05076414.1
(22) Anmeldetag: 14.06.2005
(51) Int. Cl.: F21V 14/04, F21V 14/06

(54) **Leuchte mit LED zur Erzeugung von Breitstrahlen oder von einem Punktstrahl**

(30) Priorität: 15.06.2004 DE 202004009691 U; 21.12.2004 DE 202004019939 U
(71) Anmelder: Premier Elektronik GmbH, 17375 Leopoldshagen (DE)
(72) Erfinder: Woitschöll, Dieter, 17375 Leopoldshagen (DE)
(74) Vertreter: Meissner, Peter E.

(57) **Zusammenfassung**

Die Erfindung betrifft eine Leuchte mit einem Gehäuse, wenigstens einem in dem Gehäuse angeordneten LED-Leuchtmittel und mit einer optischen Einrichtung, die in einem Abstand zum LED-Leuchtmittel in einem Strahlengang wenigstens eines Lichtstrahls angeordnet ist. Hierbei wird das LED-Leuchtmittel in einem stromaufwärts der optischen Einrichtung vorhandenen Brennpunkt angeordnet.

## Beschreibung

Die vorliegende Erfindung betrifft eine Leuchte mit einem Gehäuse, wenigstens einem in dem Gehäuse angeordneten LED-Leuchtmittel und mit einer optischen Einrichtung, die in einem Abstand zum LED-Leuchtmittel in einem Strahlengang wenigstens eines Lichtstrahls angeordnet ist und einen Lichtstrahl reflektieren und/oder brechen kann .

Solche Leuchten sind aus dem allgemeinen Stand der Technik bekannt.

Heute wird als Ersatz für Halogen-Lampen oder andere bekannte Lichtquellen häufig eine LED (Leuchtdiode) in eine Leuchte eingesetzt. Der bekannte Stand der Technik mit einer LED als Leuchtmittel zeigt den Nachteil, dass solche Leuchten nicht fokussierbar sind und daher nur zur Erzeugung eines Breitstrahles eingesetzt werden. Bei dem Versuch mit einem LED-Leuchtmittel auch einen Punktstrahl zu erzeugen, gelingt es bisher lediglich, Breitstrahlen mit reduzierter Breite zu erzeugen. Solche Leuchten können nicht zur Erzeugung eines Punktstrahls eingesetzt werden und sind bisher nicht vergleichbar mit herkömmlichen Leuchten, mit denen ein Punktstrahl eingestellt werden kann.

Die Aufgabe der vorliegenden Erfindung ist daher, eine Leuchte mit wenigstens einer LED als Leuchtmittel zu schaffen, mit der sowohl Breitstrahlen als auch ein Punktstrahl erzeugt werden kann.

Die Aufgabe wird erfindungsgemäß dadurch gelöst, dass das LED-Leuchtmittel in einem stromaufwärts oder in der optischen Einrichtung vorhandenen Brennpunkt angeordnet ist.

Die Anordnung des LED-Leuchtmittels in dem stromaufwärts oder in der optischen Einrichtung liegenden Brennpunkt ist Voraussetzung dafür, dass mit Hilfe der optischen Einrichtung, entweder eines Reflektors, einer Linseneinrichtung oder einer Kombination derselben, ein Punktstrahl erzeugt werden kann.

Es ist von Vorteil, wenn die optische Einrichtung einen Spiegelreflektor aufweist, der den Strahlengang begrenzt.

Ein weiterer Vorteil der erfindungsgemäßen Leuchte ergibt sich, wenn die optische Einrichtung eine asphärische Linse aufweist.

Durch die Veränderung des Abstandes zwischen dem LED-Leuchtmittel und der optischen Einrichtung lassen sich Breitstrahlen und wenigstens ein Punktstrahl erzeugen.

Erfindungsgemäß kann die Leuchte als Straßenleuchte verwendet werden. Aufgrund eines geringen Energieverbrauches bei optimierter Abstrahlwirkung kann eine solche Straßenleuchte mit einem Akkumulator betrieben werden, der durch Solarenergie gespeist wird.

Weitere Vorteile der vorliegenden Erfindung ergeben sich aus den Merkmalen der weiteren Unteransprüche.

Ausführungsformen der vorliegenden Erfindung werden im Folgenden anhand der Zeichnungen näher beschrieben. Es zeigen:
Fig. 1 eine schematische Darstellung von der Seite einer optischen Einrichtung in einer ersten Ausführungsform, in der ein LED-Leuchtmittel im Brennpunkt eines Spiegelreflektors angeordnet ist;
Fig. 2 eine schematische Darstellung von der Seite einer optischen Einrichtung in einer zweiten Ausführungsform, in welcher das LED-Leuchtmittel im liegenden Brennpunkt einer asphärischen Linse angeordnet ist;
Fig. 3 eine schematische Darstellung von der Seite, in der das LED-Leuchtmittel der ersten Ausführungsform in einem Spiegelreflektor drehbar angeordnet ist, zur Anwendung in einer Kennleuchte;
Fig. 4 eine schematische Darstellung einer Variante der ersten oder zweiten Ausführungsform der vorliegenden Erfindung, in welcher jeweils ein LED-Leuchtmittel auf einer Seitenfläche eines mehrseitigen Trägers mit umlaufender Linse oder umlaufendem Reflektor angeordnet ist;
Fig. 5 eine schematische Darstellung einer Straßenleuchte mit ein oder mehreren LED-Leuchtmitteln mit asphärischer Linse;
Fig. 6 eine schematische Darstellung der erfindungsgemäßen Leuchte als Handscheinwerfer;
Fig. 7 eine schematische Darstellung der erfindungsgemäßen Leuchte als Taschenleuchte.

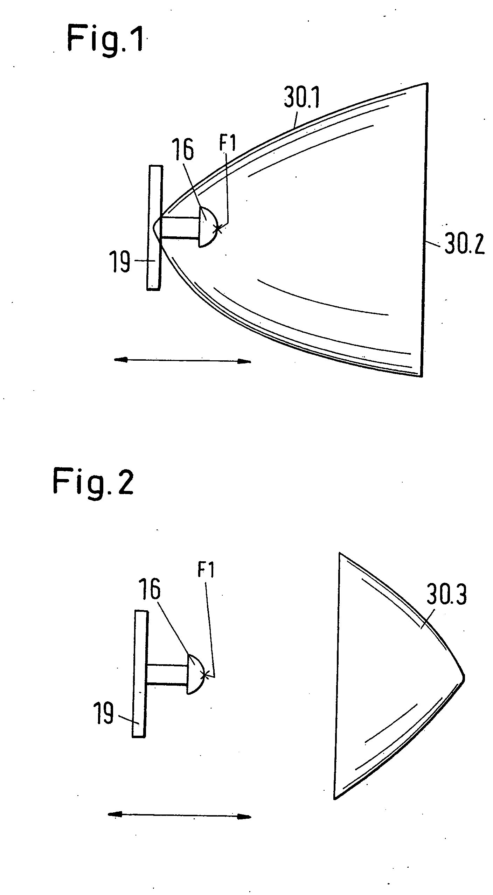

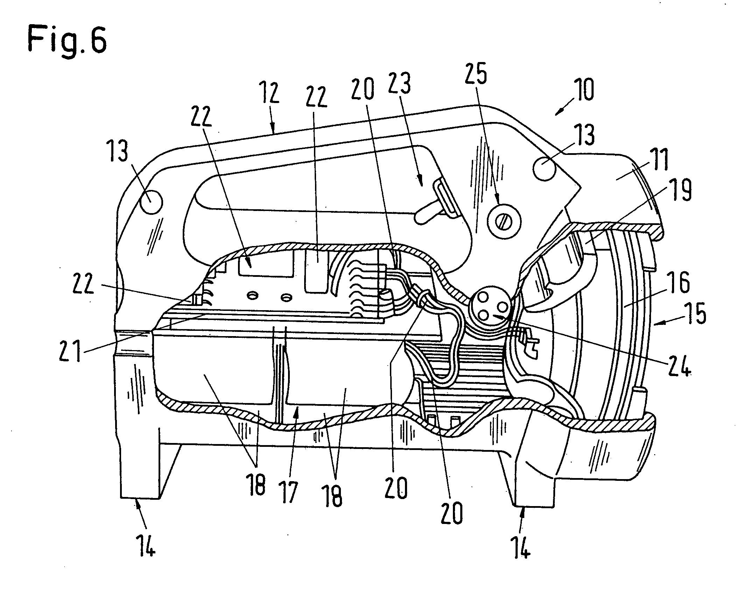

In Fig. 1 ist schematisch der Teil einer Leuchte dargestellt, der mit der Abstrahlcharakteristik einer Leuchte zu tun hat. Eine vollständige Leuchte, die die in Fig. 1 dargestellten Bauteile enthalten kann, ist in Fig. 6 schematisch dargestellt. Die in Fig. 6 dargestellte Leuchte ist ein Handscheinwerfer, in anderen Ausführungsformen kann eine solche Leuchte aber auch eine Standleuchte oder eine Straßenlaterne sein. Am Beispiel des Handscheinwerfers aus Fig. 6 wird nun der allgemeine Aufbau beschrieben. Figur 6 zeigt einen Handscheinwerfer 10 in teilweise aufgeschnittener Darstellung. Der Handscheinwerfer 10 verfügt über ein Gehäuse 11, das im Wesentlichen in einem Stück gefertigt ist. Das Gehäuse 11 kann aus üblichen Materialien bestehen, zum Beispiel aus Aluminium, Polyethylen oder einem anderen geeigneten Material. Das Gehäuse 11 ist im Bereich einer Oberseite zu einem Griff 12 geformt. Beidseitig des Griffs 12 sind Mittel zur Befestigung eines Tragegurtes ausgebildet, die in der vorliegenden Ausführungsform zwei Ösen 13 darstellen. Im Bereich einer Unterseite ist das Gehäuse zu Auflageflächen ausgeformt, zum Beispiel den dargestellten Standfüßen 14, mit denen der Handscheinwerfer 10 auf einer Unterlage abstellbar ist. An einer Seite weist das Gehäuse 11 weiterhin eine Öffnung auf, die als kreisförmige Ausnehmung 15 ausgebildet ist. In anderen Ausführungsformen kann die Öffnung auch andere geometrische Formen haben. Im Inneren des Gehäuses 11 ist ein LED-Leuchtmittel 16 angeordnet. Das LED-Leuchtmittel 16 ist im Bereich der Ausnehmung 15 des Gehäuses 11 angeordnet und liegt im Brennpunkt einer optischen Einrichtung 30 (Einzelheiten werden unten ausgeführt). Die optische Einrichtung 30 umfasst in einer ersten Ausführungsform einen Spiegelreflektor 30.1 und eine Frontscheibe 30.2, in einer zweiten Ausführungsform nur eine asphärische Linse 30.3 und in einer dritten Ausführungsform eine Kombination aus Spiegelreflektor 30.1 und asphärischer Linse 30.3. In den Ausführungsformen mit einer asphärischen Linse 30.3 kann optional auch eine Frontscheibe 30.2 vorgesehen sein. Zwischen der optischen Einrichtung 30 und dem Gehäuse 11 ist ein Dichtring 19 positioniert, der das Eindringen von Staub und/oder Feuchtigkeit in das Gehäuse 11 verhindert.

Das LED-Leuchtmittel 16 sitzt auf einer Halterung 19 im Gehäuse 11. Die Halterung 19 kann aus einem elastischen Material bestehen, beispielsweise aus einem Kunststoff oder aus Gummi 15. Durch die Halterung 19 werden Stöße, die beispielsweise von außen auf das Gehäuse 11 einwirken, zum Beispiel bei einem unsanften Absetzen des Handscheinwerfers 10, gedämpft, sodass eine Beschädigung des LED-Leuchtmittels 16 vermieden wird.

Weiterhin ist im Inneren des Gehäuses 11 eine Stromquelle 17 zur Versorgung des LED-Leuchtmittels 16 mit Energie angeordnet. Die Stromquelle 17 besteht im vorliegenden Fall aus mehreren Akkumulatoren 18, die über Leitungen 20 mit dem LED-Leuchtmittel 16 verbunden sind. Alternativ können auch Batterien zur Stromversorgung eingesetzt werden. Zur Inbetriebnahme des Handscheinwerfers 10 ist dem Gehäuse ein Ein-/Aus-Schalter 23 zugeordnet, der über Leitungen 20 mit den Akkumulatoren 18 und dem LED-Leuchtmittel 17 verbunden ist.

Im Bereich des Gehäuses 11 können weiterhin Mittel zur akustischen und/oder optischen Signalisierung angeordnet sein, beispielsweise eine (Leucht-)Diode bzw. ein Lautsprecher. Diese Mittel dienen zur Signalisierung des bevorstehenden Endes der Betriebsdauer, also dem Zeitpunkt, zu dem die in den Akkumulatoren 18 gespeicherte Energie verbraucht ist bzw. die Kapazität der Akkumulatoren 18 erschöpft ist. Zur Ermittelung der Kapazität der Akkumulatoren 18 ist im Gehäuse 11 eine Schaltung angeordnet, bestehend aus elektronischen Bauteilen 22 auf einer Platine 21. Sobald die Kapazität der Akkumulatoren unter einen bestimmten Schwellenwert fällt, wird dies durch die akustischen und/oder optischen Mittel signalisiert. Hierzu ist die Schaltung einerseits mit den Akkumulatoren und andererseits mit den akustischen und/oder optischen Mitteln verbunden, die durch die Schaltung automatisch betätigt werden. An der Stelle der Kapazität der Akkumulatoren 18 kann auch die Spannung zur Ermittlung der verbleibenden Betriebsdauer gemessen werden. Die Betätigung der optischen und/oder akustischen Mittel kann beispielsweise fünf Minuten vor Ende der Betriebsdauer erfolgen. Der Zeitpunkt, an dem vor dem Ende der Batteriekapazität gewarnt wird, kann durch entsprechende Programmierung der Schaltung angepasst werden.

Es können auch mehrere LED-Leuchtmittel 16 im Gehäuse 11 angeordnet sein. So können beispielsweise zwei LED-Leuchtmittel mit unterschiedlicher Energieaufnahme und entsprechend unterschiedlicher Leuchtkraft eingesetzt werden, zum Beispiel 1 Watt oder mehr. In Abhängigkeit von der Kapazität der Akkumulatoren 18 wird der Betrieb der beiden LED-Leuchtmittel 16 automatisch von der Schaltung gesteuert. In diesem Fall weist das Gehäuse 11 einen einzelnen Ein-/Aus-Schalter 23 auf, mit dem Handscheinwerfer 10 in Betrieb genommen werden kann. Solange eine ausreichende Kapazität vorhanden ist, werden beide LED-Leuchtmittel 16 oder alternativ das LED-Leuchtmittel 16 mit der größeren Energieaufnahme betrieben. Sobald die Kapazität unter einem bestimmten Schwellenwert fällt, wird das LED-Leuchtmittel 16 mit größerer Energieaufnahme abgeschaltet und ausschließlich das LED-Leuchtmittel 16 mit geringerer Energieaufnahme betrieben.

Weiterhin kann den LED-Leuchtmitteln 16 ein Bedienelement zur Regelung der Intensität des erzeugten Lichtstrahls zugeordnet sein, beispielsweise ein Regler, mit dem die Intensität vorzugsweise stufenlos regelbar ist. Im gezeigten Ausführungsbeispiel weist das Gehäuse 11 weiterhin eine Buchse 24 auf. Mit Hilfe der Buchse 24 ist die Stromquelle 17 und/oder das wenigstens ein LED-Leuchtmittel 16 mit einer externen Stromquelle verbindbar. Auf diese Weise kann das wenigstens eine LED-Leuchtmittel 16 unabhängig von der im Inneren des Gehäuses 11 angeordneten Stromquelle 17 betrieben werden. Ferner kann die externe Stromquelle dazu benutzt werden, die Akkumulatoren 18 aufzuladen. Weiter weist das Gehäuse 11 eine Transportsicherung 25 auf. Mit Hilfe der Transportsicherung 25 kann der Betrieb der Leuchtmittel 16 unabhängig vom Schalter 23 unterbunden werden. Auf diese Weise kann ein versehentliches Betätigen des Handscheinwerfers 10 während des Transports vermieden werden.

Vorteilhaft ist die Bedienung des Handscheinwerfers 10 mittels einer kabellosen Fernbedienung. Hierzu kann die Fernbedienung einen Ein-/Aus-Schalter aufweisen, der in seiner Funktion dem am Gehäuse 11 angebrachten Schalter 23 entspricht. Auf diese Weise kann jedes Leuchtmittel 16 betätigt werden. Weiterhin kann die Fernbedienung einen Regler für die Intensität des erzeugen Lichtstrahles aufweisen. Vorzugsweise weist die Fernbedienung jedoch einen Schalter auf, mit dem beiden vorgenannten Funktionen kombiniert steuerbar sind. Beispielsweise einem Taster, der bei einfacher Betätigung jedes Leuchtmittel 16 ein- oder ausschaltet. Ein längerer Druck auf den Taster dient zur Regelung der Intensität des erzeugten Lichtstrahls, also zur Dimmung. Weiterhin kann die Fernbedienung die gleichen optischen und/oder akustischen Mittel zur Signalisierung des Endes der Betriebszeit aufweisen wie der Handscheinwerfer 10.

In Fig. 1 ist das LED-Leuchtmittel 16 im Brennpunkt F1 angeordnet, der stromaufwärts vor Austritt eines Lichtstrahls aus der Leuchte liegt. Der Reflektor 30.1 begrenzt den Strahlengang der von dem LED-Leuchtmittel 16 emittierten Lichtstrahlen. Auf der Öffnungsseite des Spiegelreflektors 30.1 ist eine lichtdurchlässige Scheibe 30.2 angeordnet. Der Abstrahlwinkel des LED-Leuchtmittels beträgt 120 bis 160°. Der Abstand des LED-Leuchtmittels 16 von dem Spiegelreflektor 30.1 ist veränderbar (siehe Pfeilrichtng), je nachdem, ob ein Breitstrahl oder ein Punktstrahl erzeugt werden soll.

In Fig. 2 ist eine zweite Ausführungsform der optischen Einrichtung 30 dargestellt. Das LED-Leuchtmittel 16 ist im stromabwärts liegenden Brennpunkt 1 einer asphärischen Linse 30.3 angeordnet. Die asphärische Linse 30.3 ist mit einer geraden Grundfläche 30.4 dem LED-Leuchtmittel 16 zugewandt. Auch in der zweiten Ausführungsform ist der Abstand zwischen dem LED-Leuchtmittel 16 und der asphärischen Linse 30.3 veränderbar, je nachdem, ob ein Breitstrahl oder ein Punktstrahl erzeugt werden soll.

Die Veränderung des Abstandes zwischen dem LED-Leuchtmittel 16 und der optischen Einrichtung 30 erfolgt durch bekannte Verstellungsmittel, die hier nicht näher beschrieben werden sollen. In der Regel wird die optische Einrichtung 30 verstellt werden und nicht das LED-Leuchtmittel 16.

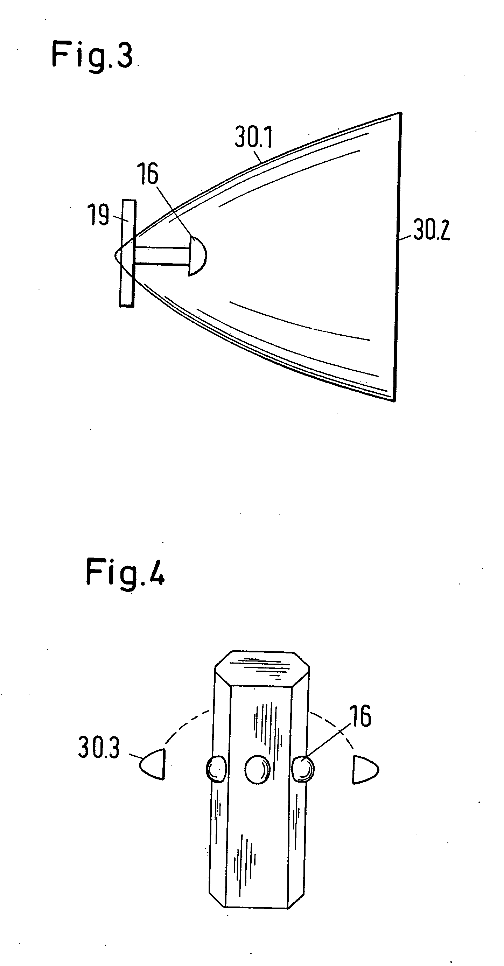

In Fig. 3 ist das LED-Leuchtmittel 16 in Bezug zu der optischen Einrichtung 30 in einer dritten Ausführungsform der vorliegenden Erfindung schematisch dargestellt. In der dritten Ausführungsform liegt das LED-Leuchtmittel 16 auch in einem Spiegelreflektor 30.1 und zwar im Brennpunkt F1, ist dort aber drehbar gelagert. Die Drehung erfolgt um die mit einem Primär-Lichtstrahl zusammenfallende optische Achse. Eine solche Ausführungsform ist einsetzbar in einer Kennleuchte, zum Beispiel einem Blaulicht. Eine Stromübertragung erfolgt in dieser Ausführungsform über einen Schleifring (nicht dargestellt), mit Kohlebürsten. Mit einer 1 Watt LED ist es möglich, die gesetzlich vorgeschriebene Lichtmenge zu erzeugen.

In Fig. 4 ist schematisch eine Halterung für mehrere LED-Leuchtmittel dargestellt, die in einer Leuchte gemäß vorliegender Erfindung Verwendung finden kann.

Ein drei- oder mehrkantiger Träger 31, mit entsprechender Flächenzahl, der in der Mitte einer Rundum-Kennleuchte eingebaut ist, weist an jeder Seitenfläche 32 wenigstens ein LED-Leuchtmittel 16 auf. Wenigstens eine asphärische Linse 30.3 bewegt sich konzentrisch um den Träger 31 herum, und zwar in einem Abstand, durch welchen die LED-Leuchtmittel 16 im zentralen Brennpunkt F1 der asphärischen Linse liegen. Vorzugsweise hat der Träger vier Seitenflächen 32, sodass vier LED-Leuchtmittel mit einem Abstrahlwinkel von 110° die gesetzlichen Voraussetzungen für ein Rundum-Licht von 360° erfüllen.

Anstelle der asphärischen Linse 30.3 kann in dieser Ausführungsform auch ein Lichtreflektor 30.1 verwendet werden. Der Lichtreflektor 30.1 dreht sich dann in einem solchen Abstand um die LED-Leuchtmittel 16 herum, dass diese in dem Brennpunkt F1 liegen.

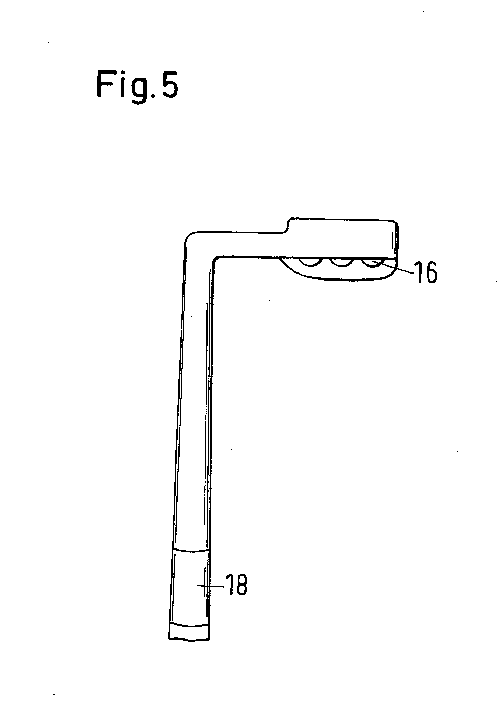

In Fig. 5 ist schematisch der obere Teil einer Straßenlaterne, eine sogenannte Straßenbeleuchtung, dargestellt. Die Straßenbeleuchtung wird wenigstens einem LED-Leuchtmittel 16 und vorzugsweise mit mehreren LED-Leuchtmitteln 16 betrieben. Die LED-Leuchtmittel 16 haben einen Abstrahlwinkel von 110° oder mehr. Die optische Einrichtung 30 wird mit einer asphärischen Linse 30.3 betrieben.

Aufgrund der Verwendung energiesparender LED-Leuchtmittel kann die Straßenbeleuchtung mit einem Akkumulator als Energiequelle betrieben werden, wie dies bereits vorstehend für den Handstrahler beschrieben wurde. Der Akkumulator kann durch Solarenergie und die entsprechende Einrichtung, die allgemein bekannt ist und nicht Gegenstand der vorliegenden Erfindung ist, ständig gespeist werden. Vorzugsweise sitzt der Akkumulator im Mast einer solchen Straßenbeleuchtung und weist einen Sensor für Tag- und Nachteinschaltung auf.

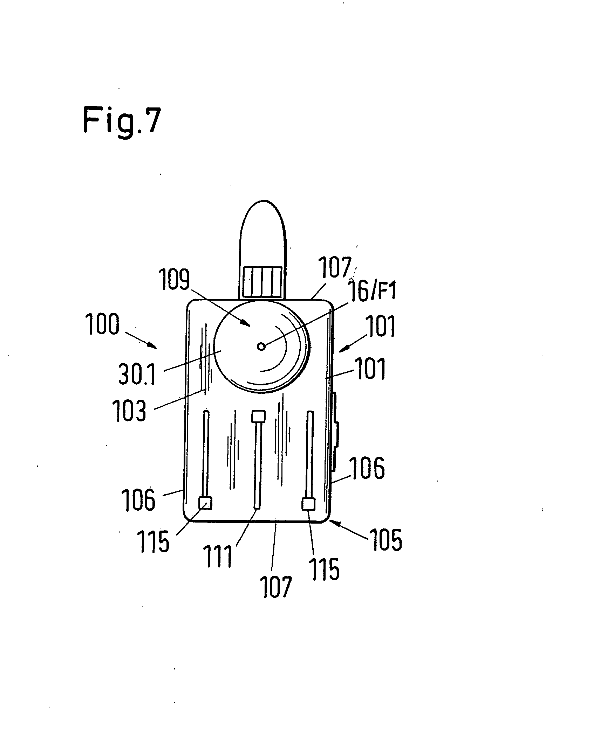

In Fig. 7 ist schematisch eine Taschenleuchte 100 dargestellt, wie sie z. B. häufig auch beim Militär zum Einsatz kommt. Eine solche Taschenleuchte 100 hat ein Gehäuse 101, das aus üblichen Materialien hergestellt sein kann, z. B. Aluminium, Polyethylen, Stahlblech oder aus einem anderen geeigneten Material.

Das Gehäuse 101 hat eine in etwa quaderförmige Gestalt, mit einer großen Frontfläche 103, einer großen Rückfläche 105, zwei kleineren Längsseitenflächen 106 und zwei kleineren Stirnseitenflächen 107. In der Frontfläche 103 ist in Bezug zur Längsrichtung, d. h., der längsten Erstreckung der Frontfläche 103 und Rückfläche 105, in einer Hälfte eine Gehäuseöffnung 109 ausgebildet. Die Gehäuseöffnung 109 dient als Lichtaustrittsöffnung. In dem Gehäuse 101, räumlich vor der Gehäuseöffnung 109, befindet sich die optische Einrichtung 30. Diese optische Einrichtung 30 kann in der Taschenleuchte 100 in einer der vorstehenden Ausführungsformen ausgebildet sein. Preiswerte und derzeit bevorzugt ist aber die erst Ausführungsform mit einem Spiegelreflektor 30.1. Die Anordnung des LED-Leuchtmittels 16 erfolgt wie in den vorstehenden Ausführungsformen im Brennpunkt F1.

Gehäuseöffnung 109 hat einen Durchmesser von wenigstens 35 mm und der Abstrahlwinkel kann bedarfsgerecht eingestellt sein, also auch die oben angegebenen Bereiche von 120 bis 160° unter- bzw. überschreiten.

Vor der Gehäuseöffnung 109 gibt es in der Regel keine Fokussiereinrichtungen, diese sind aber denkbar. Allerdings ist auf der Frontfläche 103 eine Einrichtung 111 zur Führung und Betätigung eines Ablendschiebers 113 und wenigstens eines Farbfilters 115 ausgebildet, derart, dass der Ablendschieber 113 und der wenigstens eine Farbfilter 115 wahlfrei betätigt und vor die Gehäuseöffnung 109 geschoben oder aus dessen Position vor der Gehäuseöffnung 109 weggeschoben werden kann. Dadurch können die austretende Lichtintensität beeinflusst und Leuchtsignale erzeugt werden.

## Patentansprüche

1. Leuchte mit einem Gehäuse, wenigstens einem in dem Gehäuse angeordneten LED-Leuchtmittel und mit einer optischen Einrichtung, die in einem Abstand zum LED-Leuchtmittel in einem Strahlengang wenigstens eines Lichtstrahls angeordnet ist,
**dadurch gekennzeichnet, dass** das LED-Leuchtmittel (16) in einem stromaufwärts der optischen Einrichtung (30) vorhandenen Brennpunkt (F1) angeordnet ist.

2. Leuchte nach Anspruch 1,
**dadurch gekennzeichnet, dass** die optische Einrichtung (30) einen Spiegelreflektor (30.1) aufweist, den Strahlengang begrenzt.

3. Leuchte nach Anspruch 1 oder 2,
**dadurch gekennzeichnet, dass** die optische Einrichtung (30) eine asphärische Linse (30.3) aufweist..

4. Leuchte nach einem der Ansprüche 1 bis 3,
**dadurch gekennzeichnet, dass** der Abstand zwischen jedem LED-Leuchtmittel (16) und der optischen Einrichtung (30) veränderbar ist.

5. Leuchte nach Anspruch 1 oder 2,
**dadurch gekennzeichnet, dass** jedes LED-Leuchtmittel (16) um eine mit einem Primär-Lichtstrahl zusammenfallende Achse drehbar angeordnet ist.

6. Leuchte nach Anspruch 2,
**dadurch gekennzeichnet, dass** jedes LED-Leuchtmittel (16) auf einer Seitenfläche (32) eines mehrseitigen Trägers (31) angeordnet ist und der Spiegelreflektor (30.1) um den mehrseitigen Träger (31) herum drehbar angeordnet ist.

7. Leuchte nach Anspruch 3,
**dadurch gekennzeichnet, dass** jedes LED-Leuchtmittel (16) auf einer Seitenfläche (32) eines mehrseitigen Trägers (31) angeordnet ist und wenigstens eine sphärische Linse (30.3) um den mehrseitigen Träger (31) herum drehbar angeordnet ist.

8. Leuchte nach einem der Ansprüche 1 bis 7,
**gekennzeichnet durch** einen Akkumulator (18) als Energiequelle.

9. Leuchte nach einem der Ansprüche 1 bis 8,
**dadurch gekennzeichnet, dass** das oder jedes Leuchtmittel (16) durch eine kabellose Fernbedienung betätigbar ist.

10. Leuchte nach Anspruch 9,
**dadurch gekennzeichnet, dass** ein Absinken der Kapazität einer Energiequelle unter einem bestimmten Schwellenwert durch optische und/oder akustische Mittel signalisierbar ist.

11. Leuchte nach Anspruch 9 oder 10,
**dadurch gekennzeichnet, dass** die Intensität des wenigstens einen erzeugten Lichtstrahls vorzugsweise stufenlos regelbar ist.

12. Leuchte nach einem der vorstehenden Ansprüche,
**dadurch gekennzeichnet, dass** das Gehäuse () einen Ablendschieber () aufweist, der in den Strahlengang des wenigstens einen Lichtstrahls hinein und aus diesem heraus bewegbar angeordnet ist.

13. Verwendung einer Leuchte nach einem der Ansprüche 1 bis 11 als Straßenleuchte.

14. Verwendung einer Leuchte nach einem der Ansprüche 1 bis 12 als Taschenleuchte.
